Europäisches Patentamt

European Patent Office

Office européen des brevets

(19)

(11) **EP 0 707 223 A1**

(12) **DEMANDE DE BREVET EUROPEEN**

(43) Date de publication:
**17.04.1996 Bulletin 1996/16**

(51) Int Cl.$^6$: **G02B 6/28**

(21) Numéro de dépôt: **95402221.6**

(22) Date de dépôt: **05.10.1995**

(84) Etats contractants désignés:
**AT BE CH DE ES FR GB IT LI NL SE**

(30) Priorité: **11.10.1994 FR 9412113**

(71) Demandeur: **ALCATEL N.V.**
**NL-2288 BH Rijswijk (NL)**

(72) Inventeurs:
- **Sansonetti, Pierre**
  **F-91120 Palaiseau (FR)**
- **Gabriagues, Jean-Michel**
  **F-92600 Asnieres (FR)**
- **Riant, Isabelle**
  **F-91120 Palaiseau (FR)**

(74) Mandataire: **Pothet, Jean Rémy Emile Ludovic**
**c/o SOSPI**
**14-16 rue de la Baume**
**F-75008 Paris (FR)**

(54) **Ligne à retard optique sélectif en longueur d'onde**

(57)     L'invention propose un dispositif de brassage tout-optique comprenant au moins deux lignes à retard sélectives en longueur d'onde disposées en série,

chacune desdites lignes à retard sélectives comprenant:

- une ligne à retard (gj)(p.ex. une boucle) pour retarder la propagation d'un signal optique par augmentation de la longueur du chemin optique parcouru, et
- un coupleur optique à reseau de Bragg pour l'extraction et la réinjection (Cj) pour extraire un signal optique à une longueur d'onde donnée dans une structure guidante, et réinjecter ledit signal optique à la longueur d'onde donnée dans ladite structure guidante à travers ladite ligne à retard (gj) de sorte à appliquer un retard (jτ) audit signal optique à la longueur d'onde donnée.

Applications dans des systèmes de télécommunications optique à multiplexage en longueur d'onde.

FIG.1

EP 0 707 223 A1

## Description

L'invention concerne le domaine de systèmes de transmission optiques d'informations sur des structures guidantes telles les fibres optiques, et plus précisément, les systèmes utilisant plusieurs longueurs d'onde qui sont transmises simultanément sur la même structure guidante, tels les systèmes à multiplexage en longueur d'onde.

L'invention concerne une ligne à retard sélective en longueur d'onde, c'est-à-dire un dispositif destiné à introduire un retard voulu pour un signal optique ayant une longueur d'onde donnée $\lambda_B$, sans introduire de perturbations pour les autres longueurs d'onde pouvant se trouver simultanément sur la même structure guidante.

Pour illustrer le problème résolu par le dispositif de l'invention, considérons l'exemple d'un système de transmission optique par paquets asynchrones multicanaux multiplexés en longueur d'onde, connu de l'homme de l'art par les acronymes anglophones WDM pour wavelength-division multiplexing, et ATM pour asynchronous transfer mode. Dans un tel système WDM, le routage des signaux photoniques sera fait en fonction de la longueur d'onde des signaux ; à chaque destinataire est attribué une longueur d'onde et tout signal ayant cette destination sera modulé à la longueur d'onde correspondante.

De cette manière, les différents signaux ayant différents destinataires et donc différentes longueurs d'ondes peuvent circuler simultanément sur une seule et unique structure guidante sans se perturber mutuellement.

Néanmoins, pour certaines applications qui peuvent requérir le traitement séquentiel des informations mêmes si elles sont acheminées simultanément jusqu'au dispositif de traitement, il peut être souhaitable d'établir ou de modifier l'ordre temporel de l'arrivée des paquets ayant différentes longueurs d'onde.

Pour ce faire, il faut pouvoir introduire un délai sur un ou plusieurs signaux, tandis que les autres signaux continuent à se propager sans retard.

Dans le cas le plus général, on souhaite disposer des moyens permettant d'introduire un retard d'une valeur arbitraire pour chaque longueur d'onde et pour chaque signal, de manière à les agencer librement en fonction de l'ordre temporel souhaité pour l'application envisagée.

Autrement dit, le problème peut être formulé de la façon suivante : réaliser un "brasseur" temporel pour systèmes à multiplexage temporel optique de paquets de données, par exemple pour le routage tout-optique des cellules ATM dans un réseau à haut débit.

Dans l'art antérieur, la solution d'un tel problème demande la conversion des signaux photoniques en signaux électroniques, le traitement électronique des signaux, ainsi que leur reconversion en signaux optiques après traitement. Une telle solution est onéreuse et d'une complexité prohibitive.

L'invention a pour but de pallier les inconvénients de l'art antérieur et propose un système de traitement optique des signaux optiques multiplexés en longueur d'onde afin d'effectuer leur brassage temporel.

A ces fins, un dispositif de brassage tout-optique selon l'invention est caractérisé en ce qu'il comprend au moins deux lignes à retard sélectives en longueur d'onde disposées en série,

chacune desdites lignes à retard sélectives comprenant :

- une ligne à retard pour retarder la propagation d'un signal optique par augmentation de la longueur du chemin optique parcouru, et
- des moyens d'extraction et de réinjection pour extraire un signal optique à une longueur d'onde donnée dans une structure guidante, et réinjecter ledit signal optique à la longueur d'onde donnée dans ladite structure guidante à travers ladite ligne à retard de sorte à appliquer un retard audit signal optique à la longueur d'onde donnée.

Selon une réalisation, les moyens d'extraction et de réinjection sont sous la forme d'un coupleur optique à réseau de diffraction, de type réseau de Bragg.

Par exemple, le réseau de diffraction est disposé dans une région de couplage du coupleur optique.

Typiquement, la ligne à retard applique un retard qui est caractéristique de la durée d'un motif ou d'un paquet destiné à être multiplexé.

Avantageusement, lesdites au moins deux lignes à retard sélectives en longueur d'onde comprennent des lignes à retard respectives qui appliquent des retards ayant des durées respectivement égales à $j\tau$, j entier, pour des longueurs d'onde $\lambda_j$ différentes.

L'invention fournit par ailleurs un onvertisseur tout-optique de multiplexage à longueur d'onde en multiplexage temporel comprenant un dispositif de brassage tel que défini ci-dessus.

D'autres avantages et caractéristiques de l'invention ressortiront de la description détaillée qui suit de quelques exemples de réalisations, avec ses figures annexées, dont :

- la figure 1 montre schématiquement les différents éléments nécessaires pour la mise en oeuvre de l'invention afin d'illustrer les principes de son fonctionnement;
- la figure 2 montre schématiquement une boucle elémentaire et parametrée, d'une ligne à retard sélective en longueur d'onde, qui servira de bloc modulaire pour l'illustration d'une application de l'invention;- la figure 3 montre schématiquement un exemple de la mise en oeuvre de l'invention dans une application de brassage temporel de paquets multiplexés en longueurs d'onde.

Les figures montrent des exemples non-limitatifs de réalisations de l'invention afin d'illustrer ses principes et sa mise en oeuvre. Sur toutes les figures, les mêmes repères se réfèrent aux mêmes éléments.

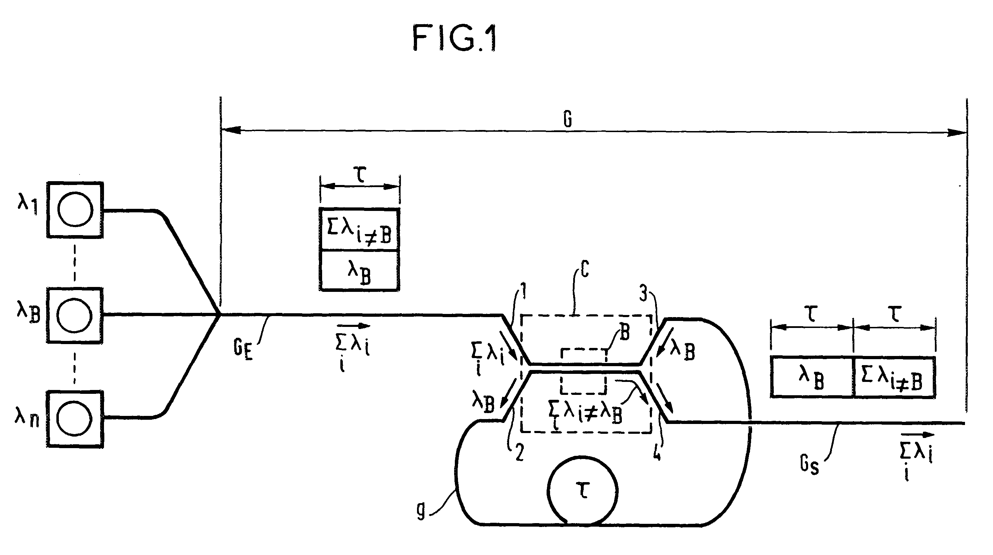

La figure 1 montre schématiquement les éléments nécessaires à la réalisation de l'invention et en illustre son principe de fonctionnement.

Les signaux multiplexés en longueur d'onde se propagent dans la structure guidante G qui comprend une partie entrée $G_E$ et une partie sortie $G_S$. Ces signaux peuvent être générés de multiples façons ; sur la figure 1 on représente une pluralité n de sources accordées à des longueurs d'ondes différentes $\lambda_1, ... \lambda_B, ... \lambda_n$, chaque longueur d'onde étant porteuse d'un canal de transmission différent $K_1, ... K_B, ... K_n$ ; tous ces canaux étant multiplexés et présents simultanément sur la structure guidante G, qui est par exemple une fibre optique ou un guide optique.

On imagine un exemple de transmission par paquets d'informations de durée. Une cellule standard ATM est composée de 53 octets. Sa durée, pour un débit binaire de à 10 Gbit/s est égale a $\tau = 42,4$ns, ce qui est équivalent à une longueur de fibre $L = \dfrac{c\tau}{n} = 8,77$ m. Donc une boucle de 8,77 m introduit un délai $\tau$ égal à un paquet ATM.

Ces paquets peuvent être présents simultanément ou non ; cela dépend du volume d'informations multiplexées qui sont véhiculées à un moment donné.

On représente la transmission multiplexée en longueur d'onde par l'ensemble des longueurs d'onde. A un moment donné sur la structure guidante G, on trouve tous les signaux à toutes les longueurs d'onde :

$$\sum_{i=i}^{n} \lambda_i = ( \sum_{i} \lambda_i \neq \lambda_B) + \lambda_B$$

La structure guidante $G_E$ achemine tous ces signaux vers un coupleur optique C sélectif en longueur d'onde. Un tel coupleur comporte quatre accès numérotés 1, 2, 3, 4 sur la figure. L'accès 1 constitue l'entrée du coupleur C, et les signaux multiplexés en longueur d'onde

$$\sum_{i} \lambda_i$$

sont acheminés par la structure guidante $G_E$ vers l'accès d'entrée 1 du coupleur sélectif.

Le coupleur optique sélectif en longueur d'onde est un composant optique qui n'est pas encore disponible commercialement.

Aussi, nous décrivons brièvement ci-après son principe de fonctionnement ainsi que le procédé d'une réalisation possible. Cette réalisation n'est qu'un exemple non-limitatif qui permet la réalisation de la présente invention. Tout autre réalisation d'un coupleur optique sélectif en longueur d'onde peut être utilisée sans sortir pour autant du cadre de l'invention.

L'exemple de réalisation d'un coupleur optique sélectif en longueur d'onde donné ci-après est décrit plus en détail dans une autre demande de brevet français assignée au même titulaire et déposée le meme jour que la présente demande sous le numéro 94 XXX le 11.10.94 ; le lecteur est invité à s'y référer pour plus de détails si nécessaire.

Un tel coupleur optique sélectif en longueur d'onde peut être réalisé par exemple en utilisant des composants optiques disponibles dans le commerce, par l'inscription de deux réseaux de Bragg équivalents chacun dans l'un des bras d'un interféromètre de Mach-Zendher, qui agit alors comme un interféromètre de Michelson pour la bande spectrale réfléchie par le réseau de Bragg B, et comme un interféromètre de Mach-Zendher en dehors de cette bande autour de la longueur d'onde du réseau Bragg $\lambda_B$.

Une réalisation plus élégante d'un coupleur sélectif en longueur d'onde est caractérisée par l'inscription d'un réseau de Bragg qui est réfléchissant pour la longueur d'onde voulue $\gamma_B$, et transparent pour toute autre longueur d'onde, dans la région de couplage d'un coupleur optique à quatre accès. Un tel coupleur peut être utilisé aussi bien pour l'extraction que pour l'insertion d'un signal ayant une longueur d'onde $\lambda_B$ qui correspond à celle réfléchie par le réseau de Bragg, à partir d'une ou vers une structure guidante G apte à véhiculer une pluralité de signaux multiplexés en longueur d'onde

$$\sum \lambda_i .$$

Dans une réalisation préférée, le coupleur optique est un coupleur 100%, ce qui donne des pertes d'insertion quasi nulles (de l'ordre de 0,1 dB/coupleur). Ce coupleur optique peut être réalisé par tous moyens, par exemple en utilisant les techniques de l'optoélectronique intégrée sur substrat semi-conducteur verre ou silice ou encore par le polissage, ou la fusion et le tirage de fibres optiques, selon les procédés connus de l'homme de l'art.

Ensuite, un réseau de Bragg est réalisé dans la région de couplage dudit coupleur pour en faire un coupleur sélectif en longueur d'onde.

En effet, le réseau de Bragg est transparent pour toute longueur d'onde autre que la longueur d'onde $\lambda_B$ qui correspond à la périodicité du réseau. Seule cette longueur d'onde $\lambda_B$ sera réfléchie par le réseau de Bragg B.

En l'absence du réseau de Bragg B, toute la lumière injectée

$$\sum_{i} \lambda_i$$

sur l'accès d'entrée 1 se retrouverait sur l'accès de sortie 4 grâce au couplage à 100%. Mais le réseau de Bragg B est réfléchissant pour la longueur d'onde $\lambda_B$, qui ne sera donc pas transmise vers l'accès de sortie 4 mais réfléchie vers l'accès 2. Mis à part cette longueur d'onde $_B$, toute la lumière restante

$$\sum_i \lambda_i - \lambda_B$$

sera couplée à 100% et transmise vers l'accès de sortie 4. Le coupleur sélectif en longueur d'onde permet ainsi d'effectuer l'extraction d'une longueur d'onde $_B$, d'un spectre

$$\sum_i \lambda_i ,$$

sans perturbation des autres longueurs d'onde

$$\sum_i \lambda_i - \lambda_B ,$$

et ce théoriquement sans pertes. Les pertes réelles seront de l'ordre de 0,1 dB par coupleur.

Le réseau de Bragg sera réalisé par tous moyens, y compris les procédés classiques bien connus de l'homme de l'art, notamment par l'impression d'une variation périodique d'indice de réfraction à l'aide de la lumière ultraviolette UV qui agit localement sur la population de défauts de structure des fibres optiques. Ces défauts peuvent être le résultat d'un dopage, par exemple le taux de Germanium utilisé dans des fibres de faible diamètre (de l'ordre de 1,40 $\mu$m, par exemple). Dans des fibres de diamètre standard (8$\mu$m à 9$\mu$m), un taux de défauts suffisant peut être introduit par l'absorption d'hydrogène, obtenue en plaçant le dispositif sous atmosphère hydrogène à forte pression (200 à 300 bars) pendant quelques semaines.

Le coupleur optique sélectif en longueur d'onde assure également l'insertion du signal ayant la longueur d'onde $\lambda_B$ du réseau de Bragg B, de la manière suivante. Nous rappelons que le spectre de toute autre longueur

$$\sum_i \lambda_i - \lambda_B$$

sera transmis sans pertes depuis l'accès principal d'entrée 1 vers l'accès de sortie 4 par le coupleur 100% C grâce à la transparence du réseau de Bragg B à ces longueurs d'onde. L'insertion du signal à la longueur d'onde $\lambda_B$ du réseau de Bragg B est effectuée en injectant ledit signal dans le coupleur C via l'accès 3, d'où il sera réfléchi, par ledit réseau de Bragg B vers l'accès de sortie 4 et sera joint en multiplexage au spectre des signaux

$$\sum_i \lambda_i - \lambda_B$$

qui transitent depuis l'accès principal d'entrée 1 vers l'accès de sortie 4.

Comme montré sur la figure 1, il suffit de raccorder l'accès d'extraction 2 du coupleur sélectif en longueur d'onde C à une extrémité d'une ligne à retard optique g, ayant une longueur physique correspondant à un délai de propagation $\tau$ (par exemple une fibre optique d'une longueur déterminée) et de raccorder l'autre extrémité de ladite ligne à retard g à l'accès d'insertion 3 dudit coupleur C sélectif en longueur d'onde, pour en faire une ligne à retard sélective en longueur d'onde.

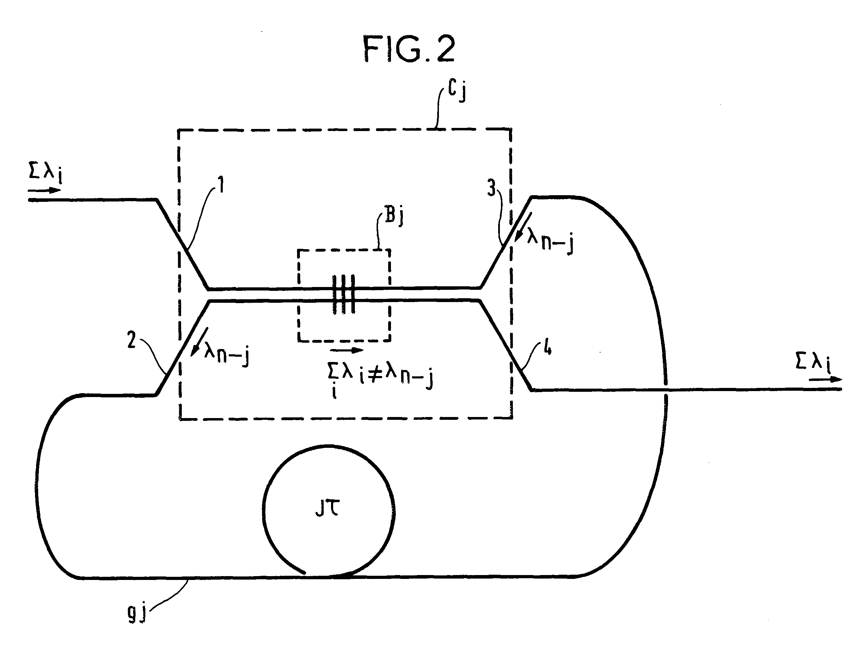

En effet, tel que montré schématiquement sur la figure 1, le signal à la longueur d'onde $\lambda_B$ du réseau de Bragg B, sera retardé d'un délai $\tau$ par rapport aux autres signaux multiplexés sur d'autres longueurs d'onde

$$\sum_i \lambda_i - \lambda_B ,$$

dans la structure guidante de sortie $G_S$. On peut répéter l'opération aussi souvent que l'on veut sur les autres longueurs d'onde afin d'attribuer un ordre arbitraire aux paquets de signaux provenant des différentes sources accordées $\lambda_i, ... \lambda_B, ... \lambda_n$. Un exemple est montré sur la figure 2.

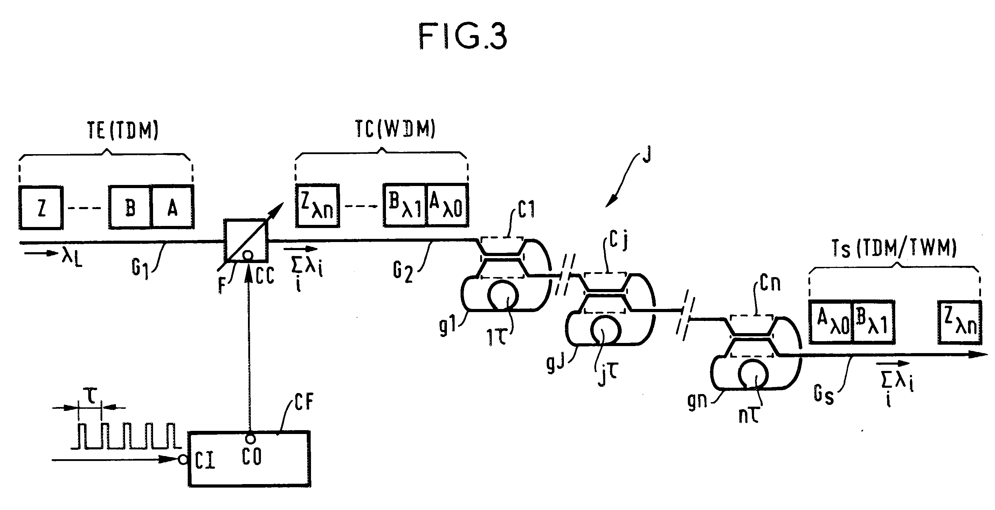

Sur la figure 2, on voit un exemple d'une boucle élémentaire et parametrée, d'une ligne à retard sélective en longueur d'onde, qui servira de bloc modulaire pour l'illustration d'une application de l'invention dans la figure 3.

De façon générale, on peut décrire la boucle élémentaire et parametrée d'une ligne à retard sélective en longueur d'onde de la figure 2 en décrivant une ligne à retard optique qui agit sur une longueur d'onde $\lambda_{n-j}$, parmi n+1 longueurs d'onde différentes $\lambda_i$, où i et j peuvent prendre toute valeur entière comprise entre 0 et n incluse. La ligne à retard d'ordre j introduit un retard de $j\tau$ uniquement pour la longueur d'onde $\lambda_{n-j}$, la seule longueur d'onde réfléchie par le réseau de Bragg B ; inscrite dans la région de couplage du coupleur optique Cj. Ce retard de $j\tau$ est obtenu à l'aide d'un guide ou d'une fibre optique gj connectée entre la sortie d'extraction 2 et l'entrée d'insertion 3 du coupleur optique sélectif en longueur d'onde Cj. La longueur du guide gj est choisie pour donner le retard $j\tau$ compte tenu de la vitesse de propagation de la lumière dans le matériau du guide, c/n : L = $j\tau$c/n.

Les autres longueurs d'onde,

$$\sum_i \lambda_i \neq \lambda_{n-j}$$

sont transmises sans retard ni réflexion ni pertes par le réseau de Bragg Bj entre l'entrée principale 1 et la sortie principale 4 du coupleur sélectif en longueur d'onde Cj.

Il est à noter que la valeur j=0 est incluse uniquement pour compléter la généralité de l'exposé ci-dessus, car la valeur j=0 correspond à un retard de $j\tau$=0 pour la longueur d'onde $\lambda_{n-j} = \lambda_n$. Ce retard nul ne donne pas lieu à l'existence d'un dispositif physique de ligne à retard sélectif pour la longueur d'onde $\lambda_n$.

La figure 3 montre schématiquement un exemple d'application d'une ligne à retard sélective en longueur d'onde selon l'invention dans un brasseur temporel tout-optique. Chaque boucle de ligne à retard sélective en longueur d'onde est conforme à la description que nous venons de donner de la figure 2.

Des paquets de données optiques A, B...Z sont présentés dans un train de paquets $T_E$ (TDM) sur le guide optique $G_1$ d'entrée du brasseur temporel. Le train de paquets est caractérisé par l'ordre des paquets (A premier, B second, Z dernier) ; la durée de chaque paquet que l'on appelle $\tau$ comme dans l'exemple de la figure 1 : et la longueur d'onde $\lambda_L$ du signal optique de chaque paquet qui est la même pour tous les paquets au départ dans cet exemple.

Avant d'effectuer le brassage temporel des paquets, on fait un multiplexage en longueur d'onde. Chaque paquet est ainsi affecté d'une longueur d'onde propre $\lambda i$, déterminée par l'écart entre sa position temporelle dans le train de paquets $T_E$ (TDM) à l'entrée $G_1$ et sa position temporelle dans le train de paquets de sortie Ts (TDM/WDM) à la sortie $G_S$. Ce multiplexage en longueur d'onde peut être effectué de différentes façons dont un exemple est donné sur la figure 3 . Un convertisseur F de longueur d'onde est accordable en longueur d'onde moyennant un signal de commande de convertisseur CC fourni par la sortie CO d'un circuit de commande d'accordage CF. Ce circuit d'accordage CF reçoit sur son entrée CI un train d'impulsions d'horloge paquets qui sont périodiques avec une durée $\tau$ entre impulsions. A chaque impulsion horloge, le circuit d'accordage CF transmet un signal de commande CO afin de changer la longueur d'onde du convertisseur F de longueur d'onde.

Ainsi, le train de paquets $T_E$ (TDM) présenté au convertisseur F de longueur d'onde par le premier guide optique $G_1$, est converti en train de paquets $T_c$ (WDM) sur le deuxième tronçon de guide optique $G_2$. Dans ce train de paquets, chaque paquet (A, B, ... Z) est associé à une longueur d'onde unique $\lambda_0$, $\lambda_1$, $\lambda_n$ respectivement. Le train de paquets $T_c$ (WDM) est ainsi multiplexé en longueur d'onde et transmis moyennant un spectre de longueurs d'onde

$$\sum_i \lambda_i$$

qui constitue autant de canaux de transmission sur le guide optique $G_2$.

L'exemple de brasseur temporel optique de la figure 2 est configuré pour invertir l'ordre temporel des paquets de données A, B, ... Z qui sont présentés en ordre alphabétique à l'entrée du brasseur sur le guide optique $G_2$. Ceci est accompli en appliquant un délai optique différent à chaque paquet, afin de déterminer sa nouvelle position dans le train de paquets de sortie $T_S$ (TDM/WDM) du brasseur.

Chaque délai optique est fourni par une ligne à retard optique sélective en longueur d'onde selon l'invention, telle que déjà décrite ci-dessus à l'aide des figures 1 et 2. Pour n+1 paquets, il faut n lignes à retard qui opèrent respectivement sur n longueurs d'onde différentes pour appliquer n retards différents. Dans l'exemple de la figure 3, il y a 26 paquets A, B...Z donc n = 25.

A la fin des n lignes à retard sélectives en longueur d'onde connectées en cascade (en séries) et conformes à la description de la jième ligne à retard donné ci-dessus, nous obtenons le train de paquets de sortie $T_S$ (TDM/WDM) sur le guide de sortie $G_S$. Nous remarquerons que l'ordre temporel du train de paquets Ts (TDM/WDM) est effectivement l'inverse de celui du train

$T_C$ (WDM) présenté à l'entrée du brasseur sur le guide $G_2$. En revanche, chaque paquet (A, B,...Z) a retenu sa propre longueur d'onde $\lambda_0$, $\lambda_1$, $...\lambda_n$ respectivement), qui peut continuer à servir pour identifier le canal de transmission correspondant, par exemple à des fins de routage ou d'identification de source/destination.

Nous avons expliqué l'exemple le plus simple de brassage temporel uniquement afin de raccourcir la description. Mais il est également possible d'obtenir l'interversion arbitraire des paquets dans un brassage moins symétrique que l'inversion décrite.

Il suffit pour cela de programmer le circuit de commande d'accordage CF de manière à attribuer la longueur d'onde qui correspond à tel délai, au paquet que l'on veut retarder de ce même délai. Les modifications nécessaires relèvent entièrement du domaine de la programmation (software), et ne demandent aucune modification physique du dispositif (hardware). En conséquence, l'utilisation du brasseur temporel ici décrit permet d'obtenir une grande souplesse, pratiquement en temps réel, des résultats qui peuvent en être attendus.

D'autres variantes et applications de l'invention pourront être imaginées par l'homme de l'art sans sortir du cadre de l'invention. Par exemple, avec un choix judicieux de paramètres d'une disposition semblable à celle de la figure 3 , il est possible d'effectuer des conversions tout-optique d'un multiplexage temporel (TDM) et inversement.

## Revendications

1.  Dispositif de brassage tout-optique comprenant au moins deux lignes à retard sélectives en longueur d'onde disposées en série,

    chacune desdites lignes à retard sélectives comprenant:

    -   une ligne à retard pour retarder la propagation d'un signal optique par augmentation de la longueur du chemin optique parcouru, et
    -   des moyens d'extraction et de réinjection pour extraire un signal optique à une longueur d'onde donnée dans une structure guidante, et réinjecter ledit signal optique à la longueur d'onde donnée dans ladite structure guidante à travers ladite ligne à retard de sorte à appliquer un retard audit signal optique à la longueur d'onde donnée.

2.  Dispositif de brassage conforme à la revendication 1, caractérisé en ce que lesdits moyens d'extraction et de réinjection sont sous la forme d'un coupleur optique à réseau de diffraction, de type réseau de Bragg.

3.  Dispositif de brassage conforme à la revendication 2, caractérisé en ce que ledit réseau de diffraction est disposé dans une région de couplage dudit coupleur optique C.

4. Dispositif de brassage conforme à l'une quelconque des revendications 1 à 3, caractérisé en ce que ladite ligne à retard applique un retard qui est caractéristique de la durée d'un motif ou d'un paquet destiné à être multipléxé.

5. Dispositif de brassage conforme à l'une quelconque des revendications précédentes, caractérisé en ce que lesdites au moins deux lignes à retard sélectives en longueur d'onde comprennent des lignes à retard respectives qui appliquent des retards ayant des durées respectivement égales à $j\tau$, $j$ entier, pour des longueurs d'onde $\lambda j$ différentes.

6. Convertisseur tout-optique de multiplexage à longueur d'onde (WDM) en multiplexage temporel comprenant un dispositif de brassage conforme à l'une quelconque des revendications précédentes.

FIG.1

FIG.2

EP 0 707 223 A1

FIG.3

**Office européen des brevets**

# RAPPORT DE RECHERCHE EUROPEENNE

Numero de la demande

EP 95 40 2221

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | PATENT ABSTRACTS OF JAPAN vol. 006 no. 145 (P-132) ,4 Août 1982 & JP-A-57 066403 (NIPPON TELEGR & TELEPH CORP) 22 Avril 1982, * abrégé * | 1-5 | G02B6/28 |
| A | | 6 | |
| Y | PATENT ABSTRACTS OF JAPAN vol. 010 no. 217 (E-423) ,29 Juillet 1986 & JP-A-61 053893 (NIPPON TELEGR & TELEPH CORP) 17 Mars 1986, * abrégé * | 1-5 | |
| A | PATENT ABSTRACTS OF JAPAN vol. 11 no. 147 (P-575) ,14 Mai 1987 & JP-A-61 284706 (HITACHI) 15 Décembre 1986, * abrégé * | 2 | |
| A | EP-A-0 618 747 (AT & T CORP) 5 Octobre 1994 * colonne 2, ligne 36 - colonne 3, ligne 43; figure 1 * | 1 | **DOMAINES TECHNIQUES RECHERCHES (Int.Cl.6)** G02B |
| A | US-A-4 890 893 (SMOOT LANNY S) 2 Janvier 1990 * colonne 3, ligne 32 - colonne 5, ligne 2; figure 3 * | 1 | |
| A | US-A-5 032 010 (SU SHING-FONG) 16 Juillet 1991 * abrégé; figure 1 * | 6 | |

Le présent rapport a été établi pour toutes les revendications

| Lieu de la recherche | Date d'achèvement de la recherche | Examinateur |
|---|---|---|
| BERLIN | 27 Novembre 1995 | von Moers, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)